(19) Europäisches Patentamt
European Patent Office
Office européen des brevets

(11) Veröffentlichungsnummer: **0 097 298**
**B1**

(12) # EUROPÄISCHE PATENTSCHRIFT

(45) Veröffentlichungstag der Patentschrift: **30.04.86**

(51) Int. Cl.⁴: **C 07 C 85/20**, C 08 G 18/10, C 08 G 18/83, C 08 G 18/50, C 08 G 18/40, C 08 G 18/22

(21) Anmeldenummer: **83105766.6**

(22) Anmeldetag: **13.06.83**

(54) **Polyamine, Verfahren zur Herstellung von Polyaminen und deren Verwendung zur Herstellung von Polyurethanen.**

(30) Priorität: **23.06.82 DE 3223398**

(43) Veröffentlichungstag der Anmeldung: **04.01.84 Patentblatt 84/1**

(45) Bekanntmachung des Hinweises auf die Patenterteilung: **30.04.86 Patentblatt 86/18**

(84) Benannte Vertragsstaaten: **AT BE CH DE FR GB IT LI NL SE**

(56) Entgegenhaltungen: **US-A-2 888 439**

(73) Patentinhaber: **BAYER AG, Konzernverwaltung RP Patentabteilung, D-5090 Leverkusen 1 Bayerwerk (DE)**

(72) Erfinder: **Fauss, Rudolf, Dr., Gerstenkamp 10, D-5000 Koeln 80 (DE)**
Erfinder: **Meiners, Hans Joachim, Dr., Ringstrasse 25, D-5090 Leverkusen 1 (DE)**
Erfinder: **Rasshofer, Werner, Dr., Wolfskaul 10, D-5000 Koeln 80 (DE)**
Erfinder: **Meyborg, Holger, Dr., Bergisch-Gladbacher Strasse 1, D-5068 Odenthal (DE)**

**EP 0 097 298 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein vereinfachtes Verfahren zur Herstellung von Polyaminen mit primären, aromatisch gebundenen Aminogruppen durch Hydrolyse von endständige aromatische Isocyanatgruppen aufweisenden Verbindungen mit einem NCO-Gehalt von 0,5 bis 40 Gew.-%, gekennzeichnet durch ein Einstufenverfahren mit hoher NCO/$NA_2$-Konversion in Gegenwart von wassermischbaren, polaren Lösungsmitteln mit Carbonsäuredialkylamid-, Laktam-, Tetraalkylharnstoff-, Sulfon-, Sulfoxid-, Phosphordialkylamid-, Nitril- und Retongruppen, mit einer Dielektrizitätskonstante von mindestens 10, einem Siedepunkt von 56 bis 250°C und gegebenenfalls unter Verwendung von die Isocyanat-Wasser-Reaktion beschleunigenden Verbindungen, insbesondere tertiären Aminen. Als Isocyanatgruppen aufweisende Verbindungen werden modifizierte Isocyanate oder NCO-Prepolymere bzw. Semiprepolymere eingesetzt. Die Erfindung betrifft ferner solche Polyamine mit einem $NH_2$-Gehalt zwischen 0,19 Gew.-% und 20,3 Gew.-% sowie die Verwendung dieser Polyamine zur Herstellung von Polyurethanen.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäuren nicht unterdrücken. Ein neueres Beispiel einer solchen Verfahrensweise findet sich in der JP-PS 55 007-827.

In der US-PS 2 888 439 wird die Säurehydrolyse von NCO-Prepolymeren mit mindestens stöchiometrischen Mengen an 5-7-N-Mineralsäure bei Raumtemperatur in Gegenwart von wassermischbaren Lösungsmitteln beschrieben. Sehr nachteilig sind die bei der Neutralisierung anfallenden sehr großen Mengen an Salzen.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden prepolymeren durch Umsetzung von Hydrazin, Aminophenylethylamin oder anderen Diaminen mit einem NCO-prepolymer aus einem Polyetherpolyol und Polyisocyanat (NCO: NH-Verhältnis = 1:1,5 bis 1:5). Nichtumgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE-B 1 555 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxylverbindungen mit Acrylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z.B. beschrieben in der US-PS 4 180 644 und der DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439). Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie 130, 314 f bzw. 332 f (1931) für zwei ganz bestimmte, heteroaromatische Monoisocyansäureester genannten Hydrolysebedingungen sind aber für Sie Überführung von Poly-NCO-Verbindungen in aliphatische und/oder aromatische Amine nicht nur völlig ungeeignet, sondern darüber hinaus auch gefährlich.

Gegenstand eigener unveröffentlichter Vorschläge nach P 29 48 419.3 und P 30 39 600.0 sind mehrstufige Verfahren zur Herstellung von Polyaminen durch alkalische Hydrolyse von NCO-Voraddukten mittels überschüssiger Basenmengen (Alkalihydroxide) zu Carbamaten, Ansäuern mittels äquivalenter oder über die Basenmenge hinaus überschüssiger Mengen an Mineralsäuren oder Ionenaustauscherharzen unter Carbamatzersetzung, gegebenenfalls Neutralisation überschüssiger Säuremengen mittels Basen und anschließende Isolierung der Polyamine.

Die hier beschriebenen mehrstufigen Verfahren zur Herstellung von Polyaminen sind alle aufwendig und es wäre noch eine weitere Vereinfachung in Ausbildung einer technisch durchführbaren Ausführungsform wünschenswert.

Leider blieben bisher alle Versuche erfolglos, in befriedigender Ausbeute Polyamine durch direkte Verseifung von Polyisocyanaten in einem Einstufenverfahren zu erhalten. Statt der gewünschten Verseifungsprodukte werden nur viele Harnstoffgruppen aufweisende, kaum mehr fließfähige, teilweise in homogene Produkte erhalten, welche entweder gar keine oder nur äußerst wenig Aminogruppen aufweisen (s. auch Vergleichsbeispiele). Der Grund durfte sein, daß die Isocyanat-Amin-Reaktion wesentlich schneller ist als die Isocyanat-Wasser-Reaktion.

Es war aus der DE-AS 1 235 499 bekannt, Lösungen von NCO-Prepolymeren in Dimethylformamid mit etwa äquivalenten Mengen Wasser (80-120 % der Theorie) unter Kettenverlängerung über Harnstoffgruppen in hochviskose Lösungen, welche zur Erspinnung von Elasthanfäden oder für Beschichtungen geeignet sind, zu überführen.

Die hiervon unterschiedliche Reaktion der NCO-Verbindungen mit überschüssigen Mengen an Wasser unter Bildung praktisch niedermolekularer Polyamine war überraschend, insbesondere auch in Gegenwart von tertiären Aminen als Katalysatoren.

Ferner ist bekannt, daß Isocyanate mit Dialkylformamiden zu Formamidinen reagieren (H. Ulrich et al, J. Org. Chem. 33, 3928-3930 (1968)).

Völlig überraschend wurde nun gefunden, daß die einstufige Hydrolyse von Polyisocyanaten, gegebenenfalls sogar ohne Katalysatoren, doch direkt zu Polyaminen unter hoher $NCO/NH_2$-Konversion führt, wenn in ausgewählten, wasserlöslichen, polaren Lösungsmitteln, gegebenenfalls unter Verwendung von die Isocyanat-Wasser-Reaktion beschleunigenden Verbindungen aus der Reihe tertiärer Amine, und anderer, noch näher zu bezeichnender Katalysatoren gearbeitet wird.

Im folgenden soll beispielhaft eine Umsetzung beschrieben werden, ohne jedoch die Allgemeingültigkeit des Verfahrens deshalb einzuschränken:

Wasser und das polare Lösungsmittel werden vorgelegt, gegebenenfalls eine die Isocyanat-Wasser-Reaktion beschleunigende Verbindung zugesetzt, zum schwachen Rückfluß erhitzt und die NCO-gruppenhaltige Verbindung unter sehr guter Vermischung zugesetzt. Die Reaktion verläuft aus der praktisch homogenen Lösung unter sofortiger $CO_2$-Abspaltung. Das Reaktionsgemisch kann direkt oder gegebenenfalls nach kürzerem weiterem Erhitzen anschließend destillativ aufgearbeitet werden. Unter Umständen kann vor dem Aufarbeiten durch Abkühlen eine phasentrennung erreicht werden. In diesem Fall wird nur die phase,welche das polyamin enthält, aufgearbeitet. Die andere phase kann sofort für eine erneute Reaktion verwendet werden.

Gegenüber den bisherigen Verfahren, bei denen Polyisocyanate in Polyamine überführt werden, hat das vorliegende erfindungsgemäße Verfahren einige bedeutende Vorteile.

Da nicht zuerst in einer ersten Stufe bei tiefer Temperatur unter gegebenenfalls Kühlaufwand das Carbamat gebildet und dieses dann in einer zweiten Stufe gegebenenfalls durch Säurezusatz in das Amin überführt werden muß, werden bei dem vorliegenden Einstufen-Eintopf-Verfahren geringere Reaktionszeiten und damit höhere Raum/Zeit-Ausbeuten erreicht. Die "Nachreaktionszeit", d.h. die Reaktionszeit nach vollständiger Zugabe der NCO-Verbindung kann entfallen oder sehr kurz gehalten werden. Es sind im allgemeinen Nachreaktionszeiten unter 5 Minuten ausreichend. Es lassen sich nach dem erfindungsgemäßen Verfahren auch NCO-prepolymere auf Polyester- und Lactonester-Basis ohne Estergruppenspaltung hydrolysieren.

Zudem vereinfacht sich die Aufarbeitung. Nach beendeter Reaktion werden Lösungsmittel und Wasser sowie evtl. verwendeter Katalysator extraktiv oder vorzugsweise destillativ abgetrennt und recyclisiert für weitere Hydrolysenschritte.

Dagegen fallen bei den bisherigen Zweistufenverfahren außerdem Alkalisalze an, welche entweder abfiltriert und deponiert werden müssen oder durch Auswaschen als salzhaltige Abwässer vorliegen. Zum Teil lassen sich solche Salze auch nur sehr schwer aus den polyaminen entfernen, besonders solchen, die auf der Basis von hydrophilen polyoxyalkylenethern mit Oxyethylensegmenten bestehen.

Gegenstand der Erfindung ist somit ein

Verfahren zur Herstellung von Polyaminen mit aromatisch gebunden, primären Aminogruppen durch Hydrolyse von aromatisch gebundenen NCO-Gruppen aufweisenden Verbindungen,

dadurch gekennzeichnet, daß man

in einem <u>Einstufen</u>-Verfahren, ohne Mitverwendung von Mineralsäuren zur NCO-Hydrolyse,

a) aromatisch gebundene NCO-Gruppen aufweisende Verbindungen mit einem Gehalt von 0,5 bis 40 Gew.-%, vorzugsweise 1,2 bis 25 Gew.-% und besonders bevorzugt von 1,5 bis 15 Gew.-%,

b) mit überschüssigen Mengen an Wasser von mindestens 2 Mol Wasser (vorzugsweise $\geqslant$ 5 Mol) pro Äquivalent NCO-Gruppe in a),

c) in Gegenwart von wassermischbaren, polaren Lösungsmitteln mit Carbonsäuredialkylamid-, Lactam-, Tetralkylharnstoff-, Sulfon-, Sulfoxid-, Phosphordialkylamid-, Nitril- und Ketongruppen; mit einem Siedebereich von 56 bis 250°C (vorzugsweise 80 bis 200°C)

und einer Dielektrizitätskonstante von mindestens 10, in Mengen von > 5 (vorzugsweise >10) Gew.-Teilen

c) bezogen auf 100 Teile a), gegebenenfalls

d) in Gegenwart von Co-Katalysatoren in Form von

1. mindestens 0,1 Teilen (vorzugsweise mindestens 1 Teil) pro 100 g NCO-Verbindung a) an tertiären Aminen und/oder

2. 0,01 bis 1 Gew.-% an Metallkatalysatoren, und/ oder 1 bis 10 Gew.-Teilen, bezogen auf 100 Teile a) der Hydroxide der I., II. und/oder III. Hauptgruppe des Periodensystems; Alkalisilikate, Alkalisulfide, Alkalicyanide; gegebenenfalls nur in Kombination mit d/1 und/ oder d/2:,

3. 0,1 bis 10 Gew.-Teilen, bezogen auf 100 Teile a), Alkalicarbonaten, Alkalihydrogencarbonaten und/oder Alkali- und Erdalkali-Salzen von Mono- oder Polycarbonsäuren, vorzugsweise Alkalisalze von aliphatischen $C_2$- bis $C_{10}$-Mono-carbonsäuren,

unter Aufrechterhaltung einer im wesentlichen homogenen Reaktionsmischung bei einer Temperatur zwischen -10 und +150°C (vorzugsweise 80 bis 130°C) hydrolysiert.

Bei dem Verfahren werden bevorzugt pro 60 Teile a) (vorzugsweise 40 Teile a)) mindestens 40 Teile b)+c)+d) (vorzugsweise mindestens 60 Teile) eingesetzt und eine homogene Reaktionsphase in der Mischung bei den gewählten Reaktionstemperaturen aufrechterhalten.

Ebenfalls Gegenstand der Erfindung ist gegebenenfalls die Mitverwendung untergeordneter Mengen von 0,1 bis 5 Gew.-% einer Verbindung mit mindestens einer, zwei oder mehreren, an aliphatische, cyclialiphatische oder aromatische Reste gebundenen Hydroxy- und/oder Amino- und/oder Thiolgruppen. Die Mitverwendung dieser "Haktive Gruppen" enthaltende Verbindungen führt zu folgenden Vorteilen:

Aus freie, niedermolekulare Polyisocyanate enthaltenden NCD-Verbindungen (z.B. NCO-Semiprepolymeren) lassen sich ohne Behandlung der NCO-Verbindungen mittels Dünnschichten oder ähnlichen Verfahren Polyamine hersteller, die praktisch frei von monomerem Polyamin sind.

Es lassen sich in einfacher Weise und in einem verbundenen Reaktionsschritt modifizierte Polyamine herstellen, die in einem Molekül über Urethangruppen, Thiourethangruppen oder Harnstoffgruppen verknüpfte Segmente gegebenenfalls unterschiedlicher Art besitzen.

Aus einer z.B. difunktionellen NCO-Verbindung läßt sich durch Verwendung einer tri- oder höherfunktionellen, "H-akiven Gruppe" besitzenden Verbindung bei der NCO-Hydrolyse ein tri- oder höherfunktionelles Polyamin gewinnen.

Gegenstand der Erfindung sind ferner Polyamine mit 0,19 bis 20,3, vorzugsweise 0,46 bis 11,3, besonders bevorzugt 0,58 bis 4,1 Gew.-% an aromatisch gebundenen primären Aminogruppen, hergestellt nach dem oben angegebenen Verfahren.

Gegenstand der Erfindung ist ferner die Verwendung der Polyamine mit aromatisch gebundenen, primären $NH_2$-Gruppen zur Herstellung von Polyurethanen sowie gegebenenfalls zellförmigen Polyurethankunststoffen und Polyurethanschaumstoffen, durch Umsetzung von:

A) Polyisocyanaten und/oder blockierten Polyisocyanaten, mit

B) Polyaminen, sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe und/oder Lösungsmittel

dadurch gekennzeichnet, daß als Komponente B) die nach dem erfindungsgemäßen Verfahren hergestellten Polyamine eingesetzt werden.

Die zwei oder mehrere, aromatische, freie NCO-Gruppen aufweisenden, im erfindungsgemäßen Verfahren einsetzbaren NCO-Verbindungen a), im folgenden auch kurz "NCO-Verbindungen" genannt, stellen entweder modifizierte, aromatische Polyisocyanate dar, wie sie durch teilweise Umwandlung der Isocyanatgruppen in Urethan-, Harnstoff-, Biuret-, oder Uretdion- oder Isocyanuratgruppen entstehen,

oder sind sogenannte NCO-Prepolymere aus gegenüber NCO-Gruppen reaktiven H-Gruppen tragenden, mehrwertigen Verbindungen des Molekulargewichts 62 bis 12 000 und (überschüssigen) Mengen an aromatischen Polyisocyanaten oder sind gegebenenfalls Semiprepolymere aus NCD-prepolymeren und zusätzlichen niedermolekularen Polyisocyanaten.

Als modifizierte aromatische Polyisocyanate sind beispielsweise geeignet:

Urethangruppen aufweisende Polyisocyanate (Polyol-modifiziert), Harnstoffgruppen aufweisende Polyisocyanate (Wassermodifizierung, DE-PS 1 230 778), Biuretgruppen aufweisende Polyisocyanate (US-PS 3 124 605, 3 201 372, GH-PS 889 050), Isocyanuratgruppen aufweisende Polyisocyanate (DE-PS'en 1 022 789 und 1 222 067) sowie Uretdiongruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band I6/III, High-polymers-Series (Wiley 1969) aufgeführt.

Solche modifizierten Polyisocyanate mit Urethan- und/oder Harnstoff- und/oder Biuret- und/oder Uretdion- und/oder Isocyanuratgruppen, wie sie im erfindungsgemäßen Verfahren einsetzbar sind, haben üblicherweise einen NCO-Gehalt von 5 bis 40 Gew.-%, bevorzugt 10 bis 25 Gew.-% und sind im wesentlichen frei von Urethangruppen.

Die im erfindungsgemäßen Verfahren eingesetzten NCO-Verbindungen a) sind besonders jedoch NCO-Prepolymere, wie sie in an sich bekannter Weise durch Umsetzung von niedermolekularen und/oder höhermolekularen Hydroxy- und/oder Amino- und/oder Thiolgruppen als reaktive Gruppen enthaltenden Verbindungen (Molekulargewicht 62 bis ca. 12 000) mit einem Überschuß an aromatischen Polyisocyanaten entstehen.

Als aromatische Polyisocyanate zur Herstellung der freie NCO-Gruppen aufweisenden Verbindungen kommen im Prinzip beliebige, von leicht hydrolysierbaren Gruppen, abgesehen von den NCO-Gruppen, im wesentlichen freie, aromatische und heterocyclische Polyisocyanate, wie sie z.B. von W. Siefken in Justus Liebigs Annalen der Chemie, 562, S. 75-136, beschrieben werden, beispielsweise solche der Formel Q $(NCO)_n$, in der n 2 bis 4,

vorzugsweise 2 und Q einen Kohlenwasserstoffrest mit 4 bis 15, einen aromatischen Kohlenwasserstoffrest mit 6 bis 15, vorzugsweise 6 bis 13 C-Atomen, bedeuten, z.B. 1,3- und 1,4-Phenylendiisocyanat, 2,4- und 2,6-Toluylendiisocyanat, sowie beliebige Gemische dieser Isomeren, Diphenylmethan-2,4'-und/oder -4,4'- und/oder 2,2'-diisocyanate, einschließlich der Alkyl- und Chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die in z.B. EP 24 665 und DE-A 2 935 318 beschriebenen alkylsubstituierten Diphenylmethandiisocyanate.

Ferner kommen beispielsweise in Frage: Triphenylmethan-4,4',4''-triisocyanat, Polyphenyl-Polymethylen-polyisocyanate, wie sie durch Anilin-Formaldehyd-Kondensation und anschließende Phosgenierung erhalten und z.B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z.B. in der DE-Auslegeschrift 1 157 601 (US-PS 3 277 138) beschrieben werden, Isocyanuratgruppen aufweisende Polyisocyanate, wie sie z.B. in der US-PS 3 001 973, in den DE-PS'en 1 022 789, 1 222 067 und 1 027 394 sowie in den DE-PS'en 1 929 034 und 2 004 048 beschrieben werden, Urethangruppen aufweisende Polyisocyanate, wie sie z.B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z.B. in der US-PS 3 654 196 beschrieben werden. Ferner sind Diarylalkylendiisocyanate, welche durch Polymerisation von Acrylnitril und gegebenenfalls weiteren ethylenisch ungesättigten Monomeren in den Diarylalkylendiisocyanaten nach dem Verfahren der EP-A 37 112 (US-PS 4 283 500) erhalten werden, einsetzbar.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), sowie Urethangruppen, Isocyanuratgruppen oder Harnstoffgruppen aufweisende Polyisocyanate ("modifizierte Polyisocyanate"). Besonders bevorzugt werden die modifizierten Polyisocyanate, die sich vom 2,4- und/oder 2,6-Toluylendiisocyanat (TDI) bzw. vom 4,4'- und/oder 2,4'- und/oder 2,2'-Diphenylmethandiisocyanat (MDI) ableiten. Technisch ist die Verwendung von TDI und MDI (oder ihren Isomergemischen) zur NCO-Prepolymerherstellung am bedeutsamsten.

Für die Herstellung der NCO-Prepolymeren werden vorzugsweise höhermolekulare Verbindungen mit einem Molekulargewicht von 400 bis 12 000, insbesondere 400 bis 6000, eingesetzt, welche mindestens 1,9, vorzugsweise 2 bis 4, insbesondere 2 bis 3, reaktive Hydroxyl-, Amino- und/oder Thiolgruppen (bevorzugt Hydroxylgruppen) als reaktive Gruppen aufweisen. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, besonders Polyester, Polylactone und Polyether, insbesondere aber Hydroxylgruppen tragende Polyether.

Die erfindungsgemäß bevorzugten, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoyid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z.B. die aus Glykolen, wie Dioder Tri-ethylenglykol, 4,4'-Dihydroxyethoxydiphenylmethan, Hexandiol und Formaldehyd oder durch Polymerisation cyclischer Acetale, wie z.B. Trioxan, herstellbare Verbindungen in Frage.

Als Hydroxylgruppen aufweisende Polycarbonate kommen solche der an sich bekannten Art in Betracht, die z.B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z.B. Diphenylcarbonat, oder Phosgen hergestellt werden können (DE-B 1 694 080, 1 915 908 und 2 221 751; DE-A 2 605 024).

Als Polyester aus Dicarbonsäuren und Diolen kommen vorzugsweise solche aus Adipinsäure- und Isophthalsäure und geradkettigen und/oder verzweigten Diolen in Betracht, ebenso Lactonpolyester, vorzugsweise auf Basis von Caprolacton und Starterdiolen.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende polyhydroxylverbindungen sowie gegebenenfalls modifizierte natürliche Polyole sind verwendbar. Auch Anlagerungsprodukte von Alkylenoxiden an phenol-Formaldehyd-Harze oder auch an Harnstoff-Formaldehyd-Harze sind erfindungsgemäß einsetzbar. Es ist auch möglich, z.B. gemäß DE-A 2 559 372, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen

(z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den o.g., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 55 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-PS 3 383 351, 3 304 273, 3 523 093, 3 110 695; DE-B 1 152 536) oder Polycarbonatpolyolen (DE-PS 1 769 795; US-PS 3 637 909) erhalten werden, sind für das erfindungsgemäße Verfahren geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Beim Einsatz von modifizierten Polyhydroxylverbindungen der o.g. Art als Ausgangsmaterialien für die Polyamine entstehen Ausgangskomponenten, die im Polyisocyanat-Polyadditionsverfahren in vielen Fällen Polyurethankunststoffe mit wesentlich verbesserten mechanischen Eigenschaften ergeben.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der o.g. Verbindungen mit mindestens zwei gegenüber Isocyanaten reaktionsfähigen Wasserstoffatomen mit einem Molekulargewicht von 400 bis 12 000, z.B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 62 bis 399, in Betracht. Auch in diesem Fall versteht man hierunter Wasser und/oder Hydroxylgruppen und/oder Aminogruppen und/ oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt: Wasser, Ethylenglykol propandiol-(1,2) und -(1,3) Butandiol-(1,4) und -(2,3), Pentandiol-(1,5), Hexan-diol-(1,6), Octandiol-(1,8), Neopentylglykol, 1,4-Bishydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Triund Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxyethyl-hydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat entstehen (DE-A 2 639 084, 2 714 084).

Erfindungsgemäß geeignete aliphatische Diamine sind beispielsweise Ethylendiamin, 1,4-Tetramethylendiamin, 1,6-Hexamethylendiamin, 1,12-Dodecamethylendia-min sowie deren Gemische, 1-Amino-3,3,5-trimethyl-5-amino-methylcyclohexan ("Isophorondiamin"), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diaminotionelle Gruppen aufweisenden reinen Polysiloxane als auch die an sich bekannten endständig organofunktionellen Siloxanpolyoxyalkylencopolymeren.

Die erfindungsgemäß besonders bevorzugten Organopolysiloxane entsprechen der allgemeinen Formel

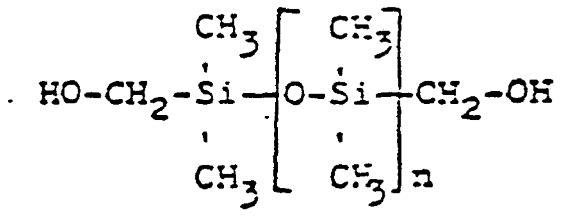

n = 5 bis 29

Sie werden in an sich bekannter Weise durch Äquilibrierung von 1,1,3,3-Tetramethyl-1,3-hydroxymethyl-disiloxan der Formel

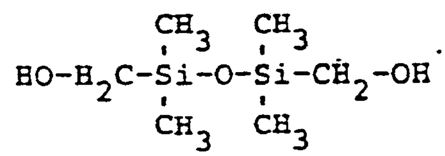

mit Octamethylcyclotetrasiloxan in Gegenwart von Schwefelsäure bzw. nach dem Verfahren der DE-B 1 236 505 hergestellt.

Die freie aromatisch gebundene Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer perhydroanthrazene (DE-A 2 638 731) und cycloaliphatische Triamine gemäß DE-A 2 614 244. Auch Hydrazin und substituierte Hydrazine, z.B. Methylhydrazin oder Dihydrazidverbindungen, kommen erfindungsgemäß in Betracht.

Als Beispiele für aromatische Diamine seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diamino-diphenylmethan, Toluylendiamin, 4,4'-Diaminodiphenylmethan, 4,4'-Di-aminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetzbaren NCO-Verbindungen ebenfalls, wenn auch weniger bevorzugt, verwendbare Verbindungen sind organofunktionelle Polysiloxane, die zwei endständige, gegenüber Isocyanatgruppen reaktionsfähige Gruppen und Struktureinheiten der Formel $-O-Si(R)_2-$ aufweisen, wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunkals 1, soll in der Regel zwischen 1,5:1 und 2,8:1 liegen. Selbstverständlich ist es möglich, einen noch größeren Überschuß an Polyisocyanat zu verwenden. Die NCO-Prepolymere (NCO-Voraddukte) haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte, während NCO/OH-Verhältnisse von unter 2 eine Erhöhung des mittleren Molekulargewichts der NCO-Voraddukte zur Folge haben. Es ist, wie schon erläutert, auch möglich, niedermolekulare Polyole als Kettenverlängerungsmittel bei der Herstellung der NCO-Prepolymeren anteilmäßig neben höhermolekularen Ausgangsverbindungen mitzuverwenden; in diesem Fall erhält man ebenfalls höhermolekulare NCO-Voraddukte.

Werden die so erhaltenen NCO-Prepolymeren noch einer Destillation - vorteilhaft unter Verwendung eines Dünnschichtverdampfers - unterworfen, wobei die monomeren Polyisocyanate entfernt werden, so werden im erfindungsgemäßen Verfahren Produkte mit einem sehr geringen bzw. praktisch ohne Gehalt an monomerem Polyamin erhalten.

Für das erfindungsgemäße Verfahren werden NCO-Prepolymere bevorzugt, die aus höhermolekularen Polyolen (Molmasse 400-12 000) vzw. Polyetherpolyolen, gegebenenfalls unter Mitverwendung von Kettenverlängerungsmitteln der oben beschriebenen Art (Molmasse 62-399) durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 10 Gew.-%.

Im erfindungsgemäßen Verfahren können jedoch auch sogenannte "Semiprepolymere", d.h. Mischungen von NCO-Prepolymeren mit weiteren freien Polyisocyanaten, eingesetzt werden, die einen u.U. noch höheren Gehalt, z.B. bis 40 Gew.-% NCO, aufweisen können. Aus praktisch/ wirtschaftlichen Gründen ist dies jedoch in den meisten Fällen nicht sinnvoll, außerdem können die aus den monomeren Polyisocyanaten entstandenen monomeren Amine bei einer Reihe von Anwendungen stören.

Die freie NCO-Gruppen aufweisenden Verbindungen a) in Form ihrer (zumeist urethangruppenfreien) modifizierten Isocyanate bzw. in Form ihrer (urethangruppenhaltigen) NCO-Prepolymeren bzw. ihre "Semiprepolymeren" besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 10 Gew.-% NCO.

Die Wassermenge b) beträgt mindestens das Doppelte derjenigen Wassermenge, welche sich aus dem stöchiometrischen Bedarf von 1 Mol Wasser pro Mol NCO-Gruppe bei der Hydrolyse der NCO-Verbindung a) errechnet. Bevorzugt wird die ⩾5-fache, besonders bevorzugt ⩾10-fache stöchiometrische Wassermenge, zumeist liegt der Anteil Wasser oberhalb von 1 Teil pro 100 Teile NCO-Verbindung a). Als wasserlösliche, wassermischbare polare Lösungsmittel c) werden solche mit Carbonsäuredialkvlamid-, Lactam-, Tetraalkylharnstoff, Sulfon-, Sulfoxid-, Phosphordialkylamid-, Nitril- und Ketongruppen mit einem Siedebereich von 56 bis 250° C, vorzugsweise 80 bis 200° C und einer Dielektrizitätskonstante von mindestens 10 eingesetzt. Die eingesetzten Mengen liegen in der Praxis ⩾ 5, bevorzugt größer ⩾ 10 Teile c) pro 100 Teile a). Sie können jedoch erheblich höher liegen. Die geeigneten Lösungsmittel lassen sich zu folgenden Substanzklassen zusammenfassen:

1. Wasserlösliche, aliphatische oder cycloaliphatische Säureamide mit 1 bis 10 Kohlenstoffatomen, z.B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon.

2. Wasserlösliche, tetraalkylierte aliphatische Harnstoffe mit 4 bis 12 C-Atomen, z.B. Tetramethylharnstoffe oder Tetraethylharnstoff.

3. Wasserlösliche, aliphatische oder cycloaliphatische Sulfone oder Sulfoxide mit 2 bis 10 Kohlenstoffatomen, z.B. Tetramethylensulfon oder Dimethylsulfoxid.

4. Wasserlösliche, aliphatische oder cycloaliphatische Phosphorsäureamide, z.B. Hexamethylphosphorsäuretriamid.

5. Das wasserlösliche Acetonitril.

6. Das wasserlösliche Keton:Aceton.

Die Lösungsmittel können auch in beliebigen Mischungsverhältnissen zueinander eingesetzt werden. Unter den genannten Lösungsmitteln werden solche bevorzugt, welche bei Normaldruck zwischen 56 und 250° C, vorzugsweise 80 bis 200° C sieden, da sich hierbei ihre Aufarbeitung vereinfacht.

Bevorzugte wassermischbare Lösungsmittel sind Dimethylformamid, Dimethylacetamid und N-Methylpyrrolidon, Tetramethylensulfon, Acetonitril und Aceton. Technisch ganz besonders geeignet und zugänglich sind Dimethylformamid und Acetonitril. Weniger bevorzugt sind die Zerewitinoff-aktiven Substanzen, wie z.B. Caprolactam oder Formamid, oder gegenüber Aminogruppen nicht völlig unreaktive Substanzen wie z.B. Aceton, obwohl auch durchaus noch akzeptable Produkte erhalten werden.

Für die Mengen (insbesondere die Obergrenzen) an einzusetzenden Lösungsmitteln c) gelten bevorzugt folgende Randbedingungen des Verfahrens:

1. Die Konzentration an NCO-Verbindung a) soll in der Hydrolyse-Reaktionsmischung ⩽ 60 Gew.-%, bevorzugt ⩽ 40 Gew.-% betragen, d.h. der Anteil an "Lösungsmitteln b)+c)+ ggf. d) beträgt größer ⩾ 40 bzw. größer ⩾ 60 Gew.-%.

2. Die Summe a)+b)+c)+d) soll 100 % betragen.

3. Es muß soviel Lösungsmittel c), Wasser und gegebenenfalls teriäres Amin verwendet werden, daß eine im wesentlichen homogene (schwach trübe) oder vorzugsweise eine homogene klare Lösung bei den Reaktionstemperaturen gebildet wird.

Als tertiäre Amine d)/1 werden vorzugsweise solche aliphatischer oder cycloaliphatischer Struktur eingesetzt, wobei auch Gemische verschiedener tertiärer Amine eingesetzt werden können.

Beispiele sind z.B. meist nicht vollständig wasserlösliche Vertreter wie die Trialkylamine, z.B. Trimethylamin, Triethylamin, Tripropylamin, Triisopropylamin, Dimethyl-n-propylamin, Tri-n-butylamin, Tri-isobutylamin, Triisopentylamin, Dimethylbutylamin, Triamylamin, Trioctylhexylamin, Dodecyldimethylamin, Dimethylcyclohexylamin, Dibutylcyclohexylamin, Dicyclohexylethylamin, Tetramethyl-1,3-butandiamin, aber auch tertiäre Amine mit einer araliphatischen Gruppe wie Dimethyl-benzylamin, Diethyl-benzylamin, α -Methylbenzyl-dimethylamin.

Bevorzugt sind Trialkylamine mit insgesamt 6 bis 15 C-Atomen in allen Alkylresten, z.B. Triethylamin bis Triamylamin bzw. Dimethylcyclohexylamin.

Gut geeignete tertiäre Amine sind neben den Trialkylaminen solche Amine, welche insbesondere in ß-Stellung zur tertiären Gruppe eine weitere tertiäre Amino- oder eine Ethergruppe aufweisen. Beispiele sind Dialkylaminoalkyl-ether oder Bis-dialkylaminoalkylether (US-PS 3 330 782, DE-B 1 030 558), z.B. Dimethyl-(2-ethoxyethyl)-amin, Diethyl-(2-methoxypropyl)-amin, Bis-[2-dimethylaminoethyl]-ether, Bis-[2-diethylamino-ethyl]-ether,Bis-[2-diethylaminoisopropyl]-ether, 1-Ethoxy-2-dimethylaminoethoxyethan, N-Methyl-morpholin, N-Ethylmorpholin, N-Butyl-morpholin, ferner permethylierte Polyalkylendiamine wie Tetramethyl-ethylendiamin, Tetramethyl-1,2-propylendiamin, Pentamethyldiethylentriamin, Hexamethyl-triethylen-tetramin und höhere permethylierte Homologe (DE-A 2 624 527 und -528), ferner Diethylaminoethyl-piperidin, 1,4-Diaza-(2,2,2)-dicyclooctan, N,N'-Dimethylpiperazin, N,N'-Diethylpiperazin, N-Methyl-N'-dimethylaminoethyl-piperazin, N,N'bis-dimethylaminoethyl-piperazin, N,N'-Bis-dimethylaminopropylpiperazin und andere, in der DE-A 2 636 787 zitierte Bis-dialkylaminoalkyl-piperazine.

Bevorzugt aus dieser Gruppe sind die wasserlöslichen Verbindungen wie Tetramethylethylendiamin, permethyliertes Diethylentriamin, N-Methylmorpholin, Bis-2-di-methylaminoethyl-ether und N-Methylpiperidin.

Einsetzen lassen sich auch acylierte tertiäre Aminderivate, wie z.B. 1-Dimethylamino-3-formylaminopro-pan, N-(2-Dimethylaminoethyl)-propionamid, N-(2-Di-ethylaminoethyl)-benzamid, sowie andere Amidgruppen (vorzugsweise Formamidgruppen) enthaltende tertiäre Amine gemäß DE-A 2 523 633 und 2 732 292.

Von relativ geringer Wirksamkeit sind tertiäre Amine vom Pyridintyp und tertiäre Amine mit mindestens einem, an das N-Atom gebundenem aromatischem Rest, z.B. Dimethylanilin.

Insoweit es sich nicht um wasserlösliche tertiäre Amine handelt, soll ihr Siedepunkt zweckmäßig unter 250° C, bevorzugt unter 200° C, liegen.

Als Verbindungen d/2 können auch die aus der Literatur für die Katalyse der Isocyanatchemie bekannten mehrwertigen Metallverbindungen im erfindungsgemäßen Verfahren angewendet werden. Es handelt sich hier bevorzugt um Verbindungen des Zinns, Zinks oder Bleis, beispielsweise seien Dibutylzinndilaurat, Zinnoctoat oder Bleioctoat genannt.

Als Cokatalysatoren d) können neben den tertiären Aminen auch die als Katalysatoren bereits bekannten Hydroxide der I., II. und/oder III. Hauptgruppe des Periodensystems der Elemente, z.B. Natriumhydroxid, Kaliumhydroxid, Calziumhydroxid, Na-aluminat, aber auch Verbindungen wie Natriumsilikat (Wasserglas), Natriumsulfid oder Natriumcyanid, vorzugsweise in Mengen von 1 bis 10 Gew.-Teilen, bezogen auf 100 Teile a), eingesetzt werden.

Es sind als Verbindungen d/3 auch Alkalicarbonate oder Hydrogencarbonate, z.B. Natrium-oder Kaliumcarbonat bzw. Natrium- oder Kaliumhydrogencarbonat (gegebenenfalls in Form ihrer Komplexe) mit cyclischen oder acyclischen, gegebenenfalls Stickstoff enthaltenden Kronenethern, aber nur in Kombination mit den Verbindungen d/1 und/oder d/2 einsetzbar. Beispielsweise seien die in Lösungsmitteln löslichen, die genannten Natium-, Kalium-, carbonat- und Hydrogencarbonat-Komplexe enthaltenden Kronenetherverbingungen:

(1,13-Bis-8-chinolyl)-1,4,7,10,13-pentaoxatridecan, 4,7,13,18-Tetraoxa-1,10-diazabicyclo-(8,5,5)-eico-san, 4,7,13,16,21-Pentaoxa-1,10-diazabicyclo-(8,8,5)-tricosan, 4,7,13,16,21,24-Eexaoxa-1,10-diazabicyclo-(8,8,8)-hexacosan, 5,6-Benzo-4,7,13,16,21,24-hexaoxa-1,10-diazabicy-clo-(8,8,8)-hexacosan, 1,4,7,10,13,16-Hexaoxacyclooctadecan, 2,5,8,11,14,17-Hexaoxaoctadecan, genannt.

Diese Verbindungen sind bekannt und beispielsweise in der Firmenschrift von Merck, Kontakte 1/77, S. 29 ff aufgeführt.

Es sind auch beliebige Gemische der beschriebenen Verbindungen katalytischer Aktivität einsetzbar.

Die genannten Verbindungen katalytischer Aktivität werden im allgemeinen der Lösung aus polarem organischem Lösungsmittel und Wasser zugesetzt. Die Zugabe zur Isocyanatgruppen-haltigen Verbindung ist u.U. möglich, aber nicht bevorzugt.

Die Metallkatalysatoren kommen im allgemeinen in Mengen von 0,01 bis 1 Gew.-Teile, bezogen auf a), zum Einsatz.

Das Verfahren der Hydrolyse läßt sich ohne Gegenwart der Katalysatoren nach b) unter alleinigem Einsatz der wasserlöslichen polaren Lösungsmittel c) durchführen. Dabei erhält man jedoch Polyamine mit reduziertem Amingehalt und dabei können die polaren Lösungsmittel c) bis zu 50 Gew.-% durch andere Lösungsmittel, vorzugsweise wasserlösliche Lösungsmittel, wie Dioxan oder Tetrahydrofuran ersetzt werden (wobei jedoch die Mindestmenge an c) pro 100 Teile a) nicht unterschritten werden darf und die Homogenität der Reaktionsmischung erhalten bleiben soll. Eine derartige Verfahrensweise ist jedoch nicht bevorzugt, kann sich jedoch anbieten, wenn die NCO-Verbindungen in Form von Lösungen in derartigen Lösungsmitteln vorliegen sollten. Wenn man, wie aus den Vergleichsbeispielen hervorgeht, wenig polare, wasserlösliche Lösungsmittel als alleinige Lösungsmittel einsetzt, ist jedoch der Hydrolysengrad so gering, daß nur unzureichend umgesetzte Produkte erhalten werden, selbst wenn tertiäre Amine oder andere Katalysatoren mitverwendet werden. Dasselbe trifft auch auf die Verwendung von nicht mit Wasser löslichen Lösungsmitteln zu.

Deutlich bessere Ergebnisse erzielt man im bevorzugten Verfahren unter Verwendung von tertiären Aminen als Katalysatoren d)/1 neben den polaren Lösungsmitteln.

Die tertiären Amine können dabei in einem weiten Mengenbereich eingesetzt werden. Man kann diese tertiären Amine in relativ kleinen, katalytischen Mengen einsetzen, z.B. 0,1 bis 20 Teile Tertiäramin pro 100 Teile NCO-Verbindung. In diesem Falle wird vorzugsweise der Anteil der polaren Lösungsmittel c) und Wasser b) relativ höher gewählt, um eine ausreichende Verdünnung der NCO-Verbindung in der Reaktionsmischung zu gewährleisten.

Zur Hydrolyse der NCO-Verbindung zu Polyaminen mit hinreichend hoher Aminzahl ist es günstig, eine Konzentration der NCO-Verbindung unter 60 Gew.-% in der Reaktionsmischung aufrechtzuerhalten (vorzugsweise unter 40 Gew.% a)).

Je größer die Verdünnung bei der Reaktion gewählt wird, um so besser wird der Hydrolyseumsatz, d.h. es werden um so höhere Aminzahlen des Polyamins, d.h. eine um so höhere Konversion der NCO- in die $NH_2$-Gruppen, erhalten. Eine Grenze der Verdünnung ergibt sich praktisch aus der Wirtschaftlichkeit bei der Aufarbeitung; sie liegt in der Praxis etwa bei 3 %iger Lösung. Wenn der Anteil der Tertiäramine wesentlich erhöht ist (z.B. 20 Teile), so übernimmt das tertiäre Amin neben dem polaren Lösungsmittel c) eine Art

Lösungsmittelfunktion.

Es sind dabei aber mindestens so viele polare, wasserlösliche Lösungsmittel c) mitzuverwenden, daß auch bei Einsatz von nicht vollständig wassermischbaren tertiären Aminen eine weitgehend homogene, vorzugsweise homogene, Reaktionsmischung verbleibt. Im allgemeinen wird man aus wirtschaftlichen Gründen bestrebt sein, die Tertiäraminmenge möglichst gering zu halten, da diese Amine d)/1 zumeist teurer als die Polaren Lösungsmittel c) sind.

In einer weniger bevorzugten Ausführungsform können dem der Reaktionsmischung auch "H-aktive Gruppen" enthaltende Verbindungen mit 2 oder mehreren Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargewichts 62-2000, insbesondere solche mit mindestens 2 primären Hydroxygruppen, z.B. Ethandiol, Butandiol, Propandiol-1,2, Polyethylenglykole, Trimethylolpropan oder ähnliche.

Selbstverständlich können auch Verbindungen mit verschiedenen "H-aktiven Gruppen" verwendet werden, z.B. Aminoethanole.

Verbindungen, die nur eine H-aktive Gruppe aufweisen, z.B. Methanol, Ethanol, Cyclohexanol, Cyclohexylamin, Anilin, asymmetrisches Dimethylhydrazin, Dimethylaminopropylamin, können als monofunktionelle Kettenabbrecher mitverwendet werden.

Als Nebenreaktion im erfindungsgemäßen Verfahren kann die Vorverlängerung auftreten, d.h. Isocyanat und bereits gebildetes Amin reagieren unter Kettenverknüpfung zu Harnstoffen. Diese Nebenreaktion läßt sich durch Arbeiten in verdünnter Lösung sowie bevorzugt durch den Einsatz der Katalysatoren weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden: Das Werteniveau eines Elastomeren, bei welchem ein nach dem erfindungsgemäßen Verfahren erhaltenes Polyamin verwendet wurde, und bei welchem bei der Herstellung ca. 18 % der NCO-Gruppen mit Aminogruppen in die Vorverlängerungsreaktion unter Harnstoffbildung abreagierten, zeigt keinen wesentlichen Abfall gegenüber einem Produkt mit fast 100 %iger Umsetzung, wie das angeführte Vergleichsbeispiel zeigt.

Die erfindungsgemäße Reaktion wird bevorzugt in homogener Phase durchgeführt. Durch ein geringfügiges Überdosieren der Wassermenge oder der Menge der NCO-Verbindung a) kann gegebenenfalls eine leichte Trübung der Reaktionsmischung erhalten werden, da die Ausgangsstoffe nicht mehr vollständig gelöst sind. Eine Durchführung im stark heterogenen Bereich, z.B. durch übermäßige Wasserzugabe unter Ausfällung des NCO-Prepolymers ergibt jedoch unzureichende Produkte.

Durch einige wenige Vorversuche lassen sich die von den Ausgangsverbindungen abhängigen optimalen Mischungsverhältnisse leicht bestimmen.

Die Reaktion kann bei Temperaturen von -10 bis +150°C durchgeführt werden. Bevorzugt wird jedoch bei Temperaturen von 80 bis 130°C gearbeitet, da hierbei die besten Raum/Zeit-Ausbeuten bei gleichzeitig hoher Löslichkeit erreicht werden. Besonders bevorzugt wird am Siedepunkt des Gemisches gearbeitet, der wegen der Anwesenheit von Wasser zumeist bei ca. 90 bis 100°C liegt. Unter besonderen Umständen kann es auch notwendig werden, die Reaktion unter Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen beobachtet wird. Wichtig ist, daß für eine sehr gute und schnelle Durchmischung der Reaktanden gesorgt wird. Die Reaktion kann diskontinuierlich oder kontinuierlich durchgeführt werden.

In einer diskontinuierlichen Ausführungsform wird die NCO-Gruppen aufweisende Verbindung a) in die wäßrige, gegebenenfalls tertiäre Amine oder Katalysatoren enthaltenden polaren Lösungsmittelmischung eingefüllt. Dies kann mittels eines Tropftrichters oder z.B. durch maschinelle Einspritzung mittels einer Düse geschehen, wobei durch intensives Rühren eine möglichst gute Verteilung angestrebt wird.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum zudosiert, z.B. mittels eines Durchflußmischers intensiv vermischt, so zur Reaktion gebracht und aus dem Mischraum schnell ausgetragen. Die Dosierung kann z.B. über graduierte Tropftrichter oder mittels einer Kolben- und/oder Membrandosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen.

Zur Erleichterung der Reaktion der Isocyanatgruppen mit der wäßrigen tertiären Aminphase können verschiedene Zusätze verwendet werden. So können zum Homogenisieren ein oder mehrere handelsübliche Emulgatoren zugesetzt werden, z.B. in Mengen von 0,01 bis 1 Gew.-Teil auf 100 Teile Reaktionsmischung. Bei Verwendung homogener Reaktionsmischungen (gelöste Komponenten) ist dies jedoch nicht notwendig. Bei den in der kontinuierlichen Ausführungsform geeigneten Durchflußmischern unterscheidet man zwischen den statischen Mischern mit festen Einbauten und dynamischen Mischern mit beweglichen Einbauten nach dem Rotor-Stater-Prinzip. Sie können gegebenenfalls geheizt oder gekühlt werden. Die erforderliche Mischenergie wird bei den statischen Mischern über die Pumpen aufgebracht, während bei den dynamischen Mischern ein separater Motor den Rotor treibt. In allen Fällen hängt der Reaktionsumsatz der Isocyanatgruppen zu Aminogruppen auch von der aufgebrachten Leistung, bzw. den entsprechend erzeugten Scherkräften, d.h. von der möglichst schnellen homogenen Verteilung der NCO-Verbindung im Reaktionsmedium ab.

Als statische Mischer lassen sich beispielsweise Mischer mit einfachen Einbauten (z.B. Wendeln) oder komplizierten Einbauten (z.B. Packungsmischern)oder Mehrkanalmischer verwenden. Weiterhin können auch Mischdüsen oder die Wischkammern in den HK-Maschinen der Fa. Hennecke (Birlinghoven, Bundesrepublik Deutschland) in die die Ausgangsprodukte unter hohem Druck eingedüst werden (Gegenstrominjektion), eingesetzt werden. Als dynamische Mischer kommen für das erfindungsgemäße Verfahren beispielsweise die Durchflußmischer in Betracht, die ebenso wie die bekannten Kreiselhomogenisierungsmaschinen nach dem Stator-Rotor-Prinzip arbeiten, dabei jedoch nicht als Förderorgane benutzt werden können. Die aufzubringende Mischungsleistung beträgt je nach gewünschtem Dispergiergräd, verwendetem Mischertyp und Viskosität der Ausgangsstoffe etwa 1 bis über 10 KW pro Liter Mischinhalt.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluß erhitzt, um das entstandene Kohlendioxid möglichst vollständig abzutrennen. Die Reaktionsmischung kann ohne Nachteile aber auch längere Zeit auf Temperatur gehalten werden.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung.

Die destillative Aufarbeitung beginnt üblicherweise ohne Vakuum und - je nach Siedepunkt der verwendeten Lösungsmittel - werden anschließend unter reduziertem Druck die flüchtigen Bestandteile abdestilliert. Im allgemeinen werden Sumpftemperaturen (im verbleibenden Polyamin) von 100 bis etwa 130°C gegen Ende der Eindampfung eingehalten.

Bei Verwendung eines Dünnschichtverdampfers können kurzfristig deutlich höhere Temperaturen, z.B. 170 bis 200°C, im Polyamin erreicht werden.

Extraktionsverfahren, nach Verdünnung mit Wasser, können mittels wasserunlöslicher Lösungsmittel mit Methylenchlorid oder Chlorbenzol durchgeführt werden, sind jedoch nicht bevorzugt.

Eine Phasentrennung des Reaktionsgemisches durch Abkühlung tritt in manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser vervollständigt oder auch erst erreicht werden. Man trennt die wäßrige, polares, wassermischbares Lösungsmittel und zumeist auch den Katalysator enthaltende Phase von der Polyaminphase ab.

Die wäßrige Phase kann dann meistens direkt wiederverwendet werden.

Die Polyaminphase enthält neben dem Polyamin Restmengen des polaren Lösungsmitteis und etwas Wasser, evtl. etwas Kataiysator, welche destillativ, gegebenenfalls unter Anlegen eines Vakuums oder über eine Dünnschichtdestillation möglichst vollständig entfernt werden.

Enthält die NCO-Gruppen-haitige Verbindung - bedingt durch ihre Herstellung - noch freies, d.h. monomeres Isocyanat, so kann u.U. das hieraus entstehende monomere Amin bei der Aufarbeitung durch Phasentrennung sich in der Wasser/organischen Lösungsmittelphase stark anreichern. Das durch diese einfache Aufarbeitung erhaltene Polyamin ist dann praktisch monomerenfrei. Es empfiehlt sich dann aber, die wäßrige Lösung durch Aufarbeitung von monomerem Amin weitgehend zu befreien, bevor es wiederverwendet wird.

Die nach der Aufarbeitung erfindungsgemäß erhaitenen Polyamine stellen im allgemeinen farblose bis schwach gefärbte, mittelviskose bis hochviskose und gegebenenfalls höherschmelzende produkte mit den bereits angegebenen Aminogruppengehalten dar. Diese Polyamine weisen entsprechend ihren Ausgangsstoffen ferner Urethan- und/oder Harnstoff- und/oder Uretdion- und/ oder Isocyanurat- und/oder Biuretgruppen, sowie gegebenenfalls Ether- und/oder Acetal- und/oder Carbonat- und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen entstehen, z.B. Harnstoffgruppen aus bereits verseiften Anteilen und frischen NCO-Verbindungen während der Hydrolysereaktion. Die Menge der in den Polyaminen enthaltenen primären Aminogruppen entsprechen maximal der Menge der NCO-Gruppen in den NCO-Verbindungen, also etwa 0,19 bis 20,3 Gew.-% $NH_2$, bevorzugt 0,46 bis 11,3 Gew.-% $NH_2$ und besonders bevorzugt 0,58 bis 4,1 Gew.-% $NH_2$.

An aliphatische Reste gebundene NCO-Gruppen liefern hochreaktive aliphatische Amine als Hydrolvsenprodukt, welche mit noch vorhandenen NCO-Gruppen sehr schnell zu Harnstoffverbindungen abreagieren und somit relativ nochmolekulare Polyharnstoffamine mit einem unpraktikablen niedrigen $NH_2$-Gehalt ergeben.

Die erfindungsgemäß erhaltenen Polyamine werden wegen ihres niedrigen Dampfdrucks vorzugsweise als Reaktionspartner für gegebenenfalls blockierte Polyisocyanate bei der Herstellung von polvurethanen (polyurethanharnstoffen), gegebenenfalls zelligen Polyurethankunststoffen oder Polyurethanschäumstoffen eingesetzt, wobei sie gegebenenfalls auch mit anderen niedermolekularen (Molekulargewicht 32 bis 399)und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs- und Zusatzstoffe. Die Herstellung von Polyurethan(harnstoff)en mittels der erfindungsgemäß hergestellten Polyamine ist ebenfalls Gegenstand der vorliegenden Erfindung. Ihre Anwendung kann z.B. für Elastomere, Beschichtungen, Fäden in der Applikation aus Schmelzen, Lösungen,

Dispersionen oder als Reaktivkomponentenmischung erfolgen. Weitere Verwendungszwecke der erfindungsgemäß hergestellten Polyamine sind z.B. Kupplungskomponenten für Diazofarbstoffe, Härter für Epoxid und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

Für die Beispiele bzw. Vergleichsbeispiele wurden folgende Isocyanatgruppen aufweisende Verbindungen eingesetzt.

I Prepolymer mit einem NCO-Gehalt von 3,5 %, hergestellt aus 2,4-Toluylendiisocyanat und einem difunktionellen Polypropylenglykolether der durchschnittlichen Molmasse 2000; f = 2.

Ia Prepolymer I gedünnschichtet.

II Prepolymer mit einem NCO-Gehalt von 3,5 %, hergestellt aus einem Gemisch von 80 % 2,4-Toluylendiisocyanat und 20 % 2,6-Toluylendiisocyanat und einem difunktionellen Polypropylenglykolether der durchschnittlichen Molmasse 2000; f = 2.

III Prepolymer mit einem NCO-Gehalt von 3,5 %, hergestellt aus 2,4-Toluylendiisocyanat und einem auf Propylenglykol gestarteten PO/EO-Mischpolyetherpolyol der durchschnittlichen Molmasse 2000; f = 2; EO-Anteil = 20 Gew.-%.

IV Prepolymer mit einem NCO-Gehalt von 4,5 %, hergestellt aus einem Gemisch von 80 % 2,4-Toluylendiisocyanat und 20 % 2,6-Toluylendiisocyanat und ein Polypropylenglykolether der durchschnittlichen Molmasse 1500; f = 2.

V Prepolymer mit einem NCO-Gehalt von 6,0 %, hergestellt aus 2,4-Toulylendiisocyanat und einem Polypropylenglykolether der durchschnittlichen Molmasse 1000; f = 2.

VI Prepolymer mit einem NCO-Gehalt von 7 6 % hergestellt aus 2,4-Toluylendiiscyanat und einem auf Propyleglykol gestarteten PO/EO-Miscgpolyetherpolyol der durchschnittlichen Molmasse 750; f = 2; EO-C-ehalt = 15 Gew.-%.

VII Prepolymer mit einem NCO-Gehalt von 1,9 % hergestellt aus 2,4-Toluylendiisocyanat und einem auf Propylenglykol gestarteten PO/EO-Mischpolyether-Tolyol der durchschnittlichen Molmasse 4000; f = 2; EO-Gehalt = 20 Gew.-%.

VIII Prepolymer mit einem NCO-C-ehalt von 3,3 %, hergestellt aus einem Gemisch vcn 50 % 2,4'-Diisocyanatodiphenylmethan und 50 % 4,4'-Diisocyanato-diphenylmethan und einem auf Propylenglykol gestarteten PO/EO-Mischpclyetherpolyol der durchschnittiichen Molmasse 2000; f = 2; EO-Gehalt = 20 Gew.-%.

IX Prepolymer mit einem NCO-Gehalt von 2,8 %, hergestellt aus 2,4-Toluylendiisocyanat und einem polypropylenglykolether der durchschnittlichen Molmasse 1500; f = 2.

X Prepolymer mit einem NCO-Gehalt von 3,5 %, hergestellt aus 2,4-Toluylenciisocyanat und einem - polytetrahydrofuran der durchschnittlichen Molmasse 2000; f = 2.

XI Gedünnschichtetes Prepolymer mit einem NCO-Gehalt von 2,1 %, hergestellt aus 2,4-Toluylendiisocyanat und einem auf Trimethylolpropan gestarteten PO-Polyether der durchschnittlichen Molmasse 6000; f = 3; EO-Gehalt = 13 Gew.-%.

XII Prepolymer mit einem NCO-Gehalt von 3,2 %, hergestellt aus 2,4-Toluylendiisocyanat und einem Polyester der durchschnittlichen Molmasse 2000, der aus Butandiol-1,4, Hexandiol-1,6 (50/50) und Adipinsäure aufgebaut ist; f = 2.

XIII Prepolymer mit einem NCO-C-ehalt von 3,6 %, hergestellt aus 2,4-Toluylendiisocyanat und einem Polyester der durchschnittlichen Molmasse 2000, der aus Butandiol/Ethylenglykol (50/50) und Adipinsäure aufgebaut ist; f = 2.

XIV Prepolymer mit einem NCO-Gehalt von 4,5 %, hergestellt aus 2,4-Toluylendiisocyanat und einem Polvpropylenglykolether der durchschnittlichen Molmasse 2000 und 1,4-Butandiol (Molverhältnis 3:1).

XV Prepolymer mit einem NCO-Gehalt von 3,1 %, hergestellt aus 2,4-Toluylendiisocyanat und einem difunktionellen Polycaprolacton (Starter: Hexandiol-1,6) der durchschnittlichen Molmasse 2200.

XVI Gedünnschichtetes Prepolymer mit einem NCO-Gehalt von 3,3 %, hergestellt aus einem Gemisch von 65 % 2,4-Toluylendiisocyanat und 35 % 2,6-Toluylen-diisocyanat und einem Polyester der durchschnittlichen Molmasse 2000, der aus Butandiol/Ethylenglykol (50/50) und Adipinsäure aufgebaut ist; f = 2

XVII Prepolymer mit einem NCO-Gehalt von 1,8 %, hergestellt aus 2,4-Toluylendiisocyanat und einem difunktionellen PO/EO-Mischpolyetherpolyol der durchschnittlichen Molmasse 4000, welches 13,8 % eines Polymeranteiles aus Styrol und Acrylnitril im Verhältnis 44:56 enthält; EO-Anteil im Polyether = 15 Gew.-%.

XVIII Prepolymer mit einem NCO-Gehalt von 3,2 %, hergestellt aus 4,4'-Diphenylmethandiisocyanat und einem auf Propylenglykol gestarteten PO/EO-Mischpolyether (20 % EO) der durchschnittlichen Molmasse 2000.

PO = Propylenoxid
EO = Ethylenoxid
f = Funktionalität

**Vergleichsbeispiele:**

a) 100 g I wurde unter heftigstem Rühren zu einer Lösung aus 1000 g Wasser und 10 ml Bis-2-dimethylaminodiethylether gegeben. Nach einer halben Stunde wurde eine zähe, völlig inhomogene, trübe Masse erhalten, die für eine evtl. Weiterverarbeitung völlig unbrauchbar war.

b) Zu 300 g Essigsäureethylester und 50 g Wasser wurden unter heftigem Rühren bei 65°C innerhalb 15 Minuten 100 g I gegeben. Es wurde noch 1 Stunde bei 65°C nachgerührt und anschließend im Wasserstrahlvakuum bei

120°C Sumpftemperatur destillativ aufgearbeitet. Es wurde eine nicht mehr rührbare, gummiartige, trübe Masse erhalten, welche nur eine Aminzahl von 5,6 (mg KOH/g) aufwies (berechnete Aminzahl 46,7; $NCO/NH_2$-Umwandlung =

$$\frac{5,6}{46,7} =$$

= 12 % der Theorie).

c) Zu 300 g Dioxan und 50 g Wasser wurden unter heftigem Rühren bei 90°C 100 g I innerhalb 15 Minuten zugegeben. Die klare Lösung wurde noch 1 Stunde bei 85°C gehalten und anschließend das Dioxan und Wasser im Wasserstrahlvakuum bis 120°C Sumpftemperatur abdestilliert. Es wurde eine schwach trübe, bei 100°C gerade noch fließfähige Masse erhalten, die bei Raumtemperatur eine fast gummiartige Konsistenz annahm. Die Aminzahl betrug 13,6 (mg KOH/g) (berechnete Aminzahl: 46,7; $NCO/NH_2$-Umwandlung =

$$\frac{13,6}{46,7}$$

= 29 % der Theorie).

Die Bestimmung der Aminzahl wurde nach der in Houben-Weyl, Methoden der organischen Chemie, Band II (1953) Seiten 660/61 beschriebenen Methode zur Bestimmung von Aminen durch Titration in Eisessig mit Perchlorsäure durchgeführt. Durch Acetylierung des primären Amins und anschließende Titration des tertiären Amins mit Perchlorsäure läßt sich einfach zwischen der evtl. verbleibenden Restmenge an Katalysator (tert. Amin) und der Aminzahl (prim. Amin) unterscheiden.

**Beispiel**

300 g Dimethylformamid (DMF), 12 g Wasser und 10 ml Triethylamiin wurden auf 90-95°C erhitzt und unter heftigem Rühren innerhalb 10 bis 15 Minuten mit 100 g NCO-Prepolymer I versetzt. Anschließend wurde im Wasserstrahlvakuum bis 120°C Sumpftemperatur destilliert, wobei das Polyamin mit einer Aminzahl von 40 (mg KOH/g) zurückblieb. Die Ausbeute betrug über 95 % der Theorie. Die theoretisch maximal erreichbare Aminzahl errechnet sich zu 46,7 (mg KOH/g); $NCO/NH_2$-Umwandlung = 86 %).

**Beispiel 2a-2v**

Die in der Tabelle 1 aufgelisteten Beispiele 2a-2v sind nach der in Beispiel 1 beschriebenen Vorschrift durchgeführt. Die Mengenverhältnisse sind nicht optimiert.

Tabelle 1

| Beispiel | je 100 g Prepolymer Nr. | Einsatzmengen g DMF | g Wasser | ml Triethylamin | Aminzahl (mg KOH/g) |
|---|---|---|---|---|---|
| 2a | II | 300 | 50 | 10 | 40 |
| 2b | III | 300 | 50 | 10 | 41 |
| 2c | IV | 600 | 100 | 20 | 55 |
| 2d | V | 600 | 100 | 20 | 72 |
| 2e | VI | 300 | 125 | 10 | 71 |
| 2f | VII | 600 | 100 | 20 | 23 |
| 2g | VIII | 600 | 100 | 20 | 38 |
| 2h | I | 300 | 50 | 5 | 39 |
| 2j | I | 300 | 50 | 20 | 41,5 |
| 2k | I | 300 | 25 | 10 | 44 |
| 21 | IX | 300 | 50 | 10 | 36 |
| 2m | X | 800 | 50 | 10 | 43,2 |
| 2n | XI | 600 | 100 | 20 | 26,4 |
| 2o | Ia | 300 | 50 | 10 | 45 |
| 2p | XII | 300 | 50 | 10 | 36 |
| 2q | XIII | 300 | 50 | 10 | 38 |
| 2r | XIV | 300 | 50 | 10 | 52 |
| 2s | XV | 600 | 100 | 20 | 37 |
| 2t | XVI | 300 | 50 | 10 | 41 |
| 2u | XVII | 300 | 50 | 10 | 21 |
| 2v | XVIII | 1200 | 200 | 40 | 35 |

**Beispiele 3a-3k**

Die in der Tabelle 2 aufgeführten Beispiele 3a-3k wurden analog der für das Beispiel 1 gegebenen Vorschrift mit dem Polvisocyanat I durchgeführt, jedoch wurden verschiedene Katalysatoren eingesetzt. Die Mengenverhältmisse sind nicht optimiert.

Tabelle 2

| Beispiel | Einsatzmengen pro 100g I | g DMF | g Wasser | Katalysator | Aminzahl (mg/ KOH/g) |
|---|---|---|---|---|---|
| 3a | 100 | 300 | 50 | 2,6g Bis-2-dimenthyl-amino-ethyl-ether | 34 |
| 3b | 100 | 300 | 50 | 10ml Permethyldiethylentriamin | 39 |
| 3c | 100 | 300 | 50 | 10ml Tetramethylethylendiamin 68 %ige wäßrige Lösung | 37 |
| 3d | 100 | 300 | 25 | 10ml Triethylamin | 42 |
| 3e | 100 | 300 | 50 | 10ml diemthylbenzylamin | 33 |
| 3f | 100 | 300 | 50 | 10ml N-Methylmorpholin | 30 |
| 3g | 100 | 1200 | 400 | 0,7g Bis-2-dimethyl-amino-ethyl-ether | 43 |
| 3h | 100 | 300 | 50 | 2,5g 1,4-Diaza-2,2,2-bicyclooctan | 38 |
| 3j | 100 | 300 | 50 | 5g dibutylzinndilaurat | 38 |
| 3k | 100 | 300 | 50 | 10g N,N-dimethylanilin | 28 |

**Beispiele 4a-4j**

Die in Tabelle 3 aufgeführten Beispiele 41-4j wurden analog der für das Beispiel 1 gegebenen Vorschrift mit dem Polyisocyanat I durchgeführt, jedoch wurden verschiedene Lösungsmittel verwendet. Weitere Änderungen sind in der Tabelle 3 vermerk. Die Mengenverhältnisse sind nicht optimiert.

Tabelle 3

| Beispiel | Einsatzmengen (je 100g NCO-Prepolymer) ml Wasser | g Bis-2-dimethyl-aminoethyl-ether | ml Lösungsmittel | Reaktionstemp. (°C) | Aminzahl (mg KOH/g) |
|---|---|---|---|---|---|
| 4a | 50 | 2,6 | 310 DMF | 90 | 33 |
| 4b | 50 | — | 310 DMF | 90 | 27 |
| 4c | 200 | — | 1200 DMF | 90 | 32 |
| 4d | 50 | 2,6 | 300 N-Methylpyrrolidon | 90 | 34,5 |
| 4e | 100 | 2,6 | 300 Tetramethylharnstoff | 90 | 29 |
| 4f | 80 | 2,6 | 600 Aceton | 57 | 29 |
| 4g | 50 | 2,6 | 300 Dimethylacetamid | 90 | 34 |
| 4h | 70 | 2,6 | 300 Acetonitril | 75 | 31 |
| 4j* | 50 | 2,6 | 300 Tetramethylensulfon | 95 | 34 |

* Destillation im Hochvakuum

**Beispiel 5**

In 600 = DMF, 100 g Wasser und 20 ml Triethylamin wurde bei 25°C 100 g des Polyisocyanates III innerhalb 15 Minuten bei heftigem Rühren einlaufen lassen. Das Reaktionsgemisch wurde hierbei leicht trübe. Nach 1 Stunde bei 25°C wurde noch 30 Minuten auf 90°C erhitzt und an-schließend im Wasserstrahlvakuum bis 120°C Sumpftemperatur eingeengt. Es wurden 91 g Polyamin der Aminzahl 42 erhalten.

**Beispiel 6**

300 g Dimethylformamid, 60 ml Wasser und 10 ml Triethylamin wurden auf 90°C erhitzt und unter heftigem Rühren innerhalb 10 bis 15 Minuten mit 100 g I versetzt. An-schlißend wurde auf Raumtempratur abgekühlt und die beiden Phasen getrennt. Beide Phasen wurden durch Destillation im Wasserstrahlvakuum bis 120°C Sumpftemperatur aufgearbeitet. Es wurden 91 g fast farbloser Aminopolyether der Aminzahl 36 erhalten, der nach gaschromatographischer Untersuchung praktisch frei von monomerem 2,4-Toluylendiamin war. Aus der zweiten Phase wurden 6 g eines dunkel gefärbten Polyamins der Aminzahl 100 erhalten, welches zu ca. 4 % aus 2,4-Toluylendiamin bestand.

**Beispiel 7**

Es wurde verfahren wie im Beispiel 6, jedoch wurde die Wasser/DMF/Triethylaminphase nicht aufdestilliert, sondern recyclisiert. Hierzu wurde die Zusammensetzung gaschromatographisch bestimmt und die geringem fehlenden Wasser-, DNF-, sowie Triethylaminmengen zu den Einsatzmengen vcn Beispiel 6 ergänzt.

Zu dieser auf 90°C erhitzten Lösung wurde unter heftigem Rühren 100 g I zugegeben, 4 Minuten bei 90°C weitergerührt und anschließend durch Destillation im Wasserstrahlvakuum bis 120°C Sumpftemperatur aufgearbeitet. Das Polyamin mit einer Aminzahl von 41,6 blieb als Rückstand.

**Beispiel 8**

Eine 50°C warme Lösung aus 100 g Dimethylformamid und 100 g I und eine 90°C warme Lösung aus 200 g DMF, 25 ml Wasser und 10 ml Triethylamin wurden schnell vereinigt und anschließend auf 80°C erwärmt. Es wurde im Wasserstrahlvakuum bis 120°C Sumpftemperatur aufdestilliert, wobei das Polyamin mit einer Aminzahl von 41,6 zurückblieb.

**Beispiel 9**

In 250 g Dimethylformamid und 50 g Wasser wurden bei 90°C 2 g Natriumcarbonat suspendiert und unter heftigem Rühren mit 100 g I versetzt. Es wurde 4 Minuten bei 90°C nachgerührt und anschließend abgekühlt. Die Polyaminphase wurde abgetrennt, mit Methylenchlorid verdünnt und mehrmals mit Wasser gewaschen. Es wurde eingeengt und die letzten Mengen DMF gegen Ende im Hochvakuum bei 120°C Sumpftemperatur entfernt. Das zurückbleibende Polyamin wies eine Aminzahl von 36 auf.

**Beispiel 10**

Es wurde vorgegangen wie in Beispiel 9, jedoch wurde eine Mischung aus 1,4 g Kaliumcarbonat und 7,0 g 18-Krone-6 als Katalysator eingesetzt. Die Ansatzlösung war homogen. Nach analogem Aufarbeiten wurde das Polyamin mit der Aminzahl 37 erhalten.

**Beispiel 11**

100 Teile eines einen NCO-Gehalt von 6,86 % aufweisenden NCO-Prepolymeren, das aus einem aus 50 % 2,4'-Diisocyanatodiphenylmethan und 50 % 4,4'-Diisocyanatodiphenylmethan bestehenden Gemisch und einem linearen Polypropylenglykolether der durchschnittlichen Molmasse 1500 hergestellt wurde, werden bei 70°C mit einem Vernetzergemisch, bestehend aus 85 Teilen eines Aminopolyethers (Aminzahl 30) hergestellt nach dem erfindungsgemäßen Verfahren aus einem NCO-Prepolymer (aus 2,4-Toluylendiisocyanat und einem eine durchschnittliche Molmasse von 2000 aufweisenden linearen Polvpropylenglykolether) und 10 Teile einem Isomergemisch aus 1,3'-Diamino-2,4-diethyl-6-methyl-benzol und 1,3-Di-amino-4,6-diethyl-2-methyl-benzol ("DETA") umsetzt. Daten in Tabelle 4.

**Beispiel 12**

Alle Komponenten und Randbedingungen entsprechen Beispiel 11, jedoch beträgt die Aminzahl des Aminopolyethers 44,5. Daten in Tabelle 4.

Tabelle 4

| | | Beispiel 11 | Beispiel 12 |
|---|---|---|---|
| | Aminopolyether (Gwt.) | 85 | 85 |
| Vernetzer- | NH-Zahl | 30 | 44 |
| gemisch (A) | DETA (Gwt.) | 10 | 10 |
| Prepolymer (B) | | (6,85 % NCO) | |
| A:B | Vermischungsverhältnis (Gwt.) | 100:89,4 | 100:78,5 |
| | Prepolymer/ Vernetzergemisch (NCO/NH-Äquivalentverhältnis) "Kennzahl" | 110 | 110 |
| Zugversuch DIN 53 504 | $\sigma$-100 MPa | 3,7 | 4,1 |
| | $\sigma$-300 MPa | 6,5 | 7,4 |
| | $\sigma$-500 MPa | 10,1 | 12,1 |
| | MPa | 25,2 | 29,7 |
| | % | 750 | 680 |
| Weiterreißversuch DIN 53 515 | KN/m | 25,5 | 26,8 |
| Shore-Härte DIN 53 505 | A | 71 | 72 |
| Elastizität DIN 53 512 | % | 41 | 41 |
| Druckverformungsrest DIN 53 517 (24 h-70°C) | % | 36 | 33 |
| Abrieb DIN 53 516 | $mm^3$ | 99 | 90 |
| Gießzeit (sec) | | 10 | 11 |
| Knickzeit (min) | | Sofort knickfest | Sofort knickfest |

**Patentansprüche**

1) Verfahren zur Herstellung von Polyaminen mit aromatisch gebundenen primären Aminogruppen durch Hydrolyse von aromatisch gebundenß NCO-Gruppen aufweisenden Verbindungen,
dadurch gekennzeichnet, daß man
in einem Einstufenverfahren, ohne Mitverwendung von Mineralsäuren zur NCO-Hydrolyse,

a) aromatisch gebundene NCO-Gruppen aufweisende Verbindungen mit einem Gehalt von 0,5 bis 40 Gew.-% NCO,

b) mit überschüssigen Mengen an Wasser von mindestens 2 Mol Wasser pro Äquivalent NCO-Gruppe,

c) in Gegenwart von wassermischbaren, polaren Lösungsmitteln mit Carbonsäuredialkylamid-, Lactam-, Tetraalkylharnstoff-, Sulfon-, Sulfoxid-, Phosphorsäuredialkylamid-, Nitrilund Ketongruppen

mit einem Siedebereich von 56 bis 250°C und einer Dielektrizitätskonstante von mindestens 10

in Mengen von mindestens 5 Teilen, bezogen auf 100 Teile a)

gegebenenfalls

d) in Gegenwart von Co-Katalysatoren in Form von

1. mindestens 0,1 Teilen an tertiären Aminen pro 100 Teile NCO-Verbindung a) und/oder

2. 0,01 bis 10 Gew.-% an mehrwertigen Metallkatalysatoren, und/oder 0,1 bis 10 Gew.-Teilen, bezogen auf 100 Teile a) der Hydroxide der I., II. und/oder III. Hauptgruppe des Periodensystems, Alkalisilikate, Alkalicyanide; sowie gegebenenfalls in Kombination mit d/1 und/oder d/2

3. 0,1 bis 10 Gew.-Teilen, bezogen auf 100 Teile a), Alkalicarbonaten, Alkalihydrogencarbonaten und/oder Alkali- und Erdalkalisalzen von Monooder Polycarbonsäuren,

unter Aufrechterhaltung einer im wesentlichen homogenen Reaktionsphase bei einer Temperatur zwischen -10 und +150°C hydrolysiert.

2) Verfahren nach Anspruch 1, dadurch gekennzeichnet, daß man als NCO-Verbindung a) NCO-Verbindungen mit einem NCO-Gehalt von 1,5 bis 10 Gew.-%, aus höhermolekularen Polyolen der Molmasse 400 bis 12 000, gegebenenfalls unter Mitverwendung von Kettenverlängerungsmitteln der Molmasse 62 bis 399, und aromatischen Diisocyanaten, einsetzt.

3) Verfahren nach Ansprüchen 1 und 2, dadurch gekennzeichnet, daß man einen Anteil an Wasser b) von mindestens der 5-fachen molaren Menge, bezogen auf eine NCO-Gruppe, verwendet.

4) Verfahren nach Ansprüchen 1 bis 3, dadurch gekennzeichnet, daß man als wassermischbare, polare Lösungsmittel c) Dimethylformamid, Dimethylacetamid, N-Methylpyrrolidon, Tetramethylensulfon, Acetonitril und/oder Aceton in Mengen von mindestens 10 Teilen d) pro 100 T a) einsetzt.

5) Verfahren nach Ansprüchen 1 bis 4, dadurch gekennzeichnet, daß man als wassermischbare, polare Lösungsmittel Acetonitril und/oder Dimethylformamid verwendet.

6) Verfahren nach Ansprüchen 1 bis 5, dadurch gekennzeichnet, daß man aliphatische oder cycloaliphatische, tertiäre Amine mit einem Siedepunkt bis 250°C verwendet.

7) Verfahren nach Ansprüchen 1 bis 6, dadurch gekennzeichnet, daß man als nicht-wassermischbare Trialkylamine Triethylamin, Tripropylamin und/oder Tributylamin verwendet.

8) Verfahren, dadurch gekennzeichnet daß man auf 60 Teile NCO-Verbindung a) mindestens 40 Teile b)+c)+d) einsetzt.

9) Polyamine mit aromatisch gebundenen primären Aminogruppen und einem Gehalt von 0,19 bis 20,3 Gew.-% $NH_2$, hergestellt nach Verfahren der Ansprüche 1 bis 8.

10) Verwendung der Polyamine mit aromatisch gebundenen primären $NH_2$-Gruppen zur Herstellung von gegebenenfalls zellförmigen oder geschäumten Polyurethanen, durch Umsetzung von:

A) Polyisocyanaten und/oder blockierten Polyisocyanaten mit

B) Polyaminen, sowie gegebenenfalls

C) weiteren, niedermolekularen und/oder höhermolekularen Verbindungen mit gegenüber Isocyanaten reaktiven Gruppen, gegebenenfalls in Anwesenheit an sich bekannter Hilfs- und Zusatzstoffe und/oder Lösungsmittel,

dadurch gekennzeichnet, daß als Komponente B) die nach dem erfindungsgemäßen Verfahren hergestellten Polyamine eingesetzt werden.

## Claims

1. Process for the production of polyamines containing aromatically bound primary amino groups by the hydrolysis of compounds containing aromatically bound NCO groups, characterised in that in a single-stage process, without the use of mineral acids for the NCO hydrolysis,

a) compounds containing aromatically bound NCO groups and having a content of 0.5 to 40% by weight of NCO are hydrolysed

b) with excess quantities of water of at least 2 mols of water per equivalent of NCO group,

c) in the presence of water-miscible, polar solvents containing carboxylic acid dialkylamide, lactam, tetraalkylurea, sulphone, sulphoxide, phosphoric acid dialkylamide, nitrile and ketone groups,

having a boiling point range of 56 to 250°C and a dielectric constant of at least 10,

in quantities of at least 5 parts, based on 100 parts of a), optionally

d) in the presence of co-catalysts in the form of

1. at least 0.1 part of tertiary amines per 100 parts of NCO compound a) and/or

2. 0.01 to 10% by weight of polyfunctional metal catalysts, and/or 0.1 to 10 parts by weight, based on 100 parts of a), of the hydroxides of main group I, II and/or III of the periodic system, alkali silicates, alkali cyanides; and optionally in combination with d/1 and/or d/2,

3. 0.1 to 10 parts by weight, based on 100 parts of a), of alkali carbonates, alkali hydrogen carbonates and/or

alkali and alkaline earth metal salts of mono- or polycarboxylic acids,

at a temperature between -10 and +150°C, while maintaining a substantially homogeneous reaction phase.

2. Process according to Claim 1, characterised in that NCO compounds having an NCO content of 1.5 to 10% by weight, of relatively high molecular weight polyols having a molecular weight of 400 to 12 000, optionally using chain lengthening agents having a molecular weight of 62 to 399, and aromatic diisocyanates, are used as the NCO compound a).

3. Process according to Claims 1 and 2, characterised in that a quantity of water b) of at least 5 times the molar quantity, based on one NCO group, is used.

4. Process according to Claims 1 to 3, characterised in that dimethyl formamide, dimethyl acetamide, N-methylpyrrolidone, tetramethylene sulphone, acetonitrile and/or acetone are used in quantities of at least 10 parts of d) per 100 parts of a), as the water-miscible, polar solvents c).

5. Process according to Claims 1 to 4, characterised in that acetonitrile and/or dimethyl formamide are used as the water-miscible, polar solvents.

6. Process according to Claims 1 to 5, characterised in that aliphatic or cycloaliphatic, tertiary amines having a boiling point up to 250°C are used.

7. Process according to Claims 1 to 6, characterised in that triethylamine, tripropylamine and/or tributylamine are used as the water-immiscible trialkylamines.

8. Process, characterised in that at least 40 parts of b)+c)+d) are used per 60 parts of NCO compound.

9. Polyamines containing aromatically bound primary amino groups and having a content of $NH_2$ of 0.19 to 20.3% by weight, produced by processes of Claims 1 to 8.

10 Use of the polyamines containing aromatically bound primary $NH_2$ groups for the production of optionally cellular or foamed polyurethanes, by reacting:

A) polyisocyanates and/or blocked polyisocyanates with

B) polyamines, and optionally

C) other, low molecular weight and/or relatively high molecular weight compounds containing groups reactive towards isocyanates, if appropriate in the presence of auxiliaries and additives and/or solvents known per se,

characterised in that the polyamines produced by the process according to the invention are used as component B).

**Revendications**

1. Procédé de production de polyamines portant des groupes amino primaires en liaison aromatique par hydrolyse de composés porteurs de groupes NCO en liaison aromatique, caractérisé en ce qu'on hydrolyse à une température comprise entre -10 et + 150°C, en entretenant une phase réactionnelle essentiellement homogène, par un procédé à une seule étape sans utilisation simultanée d'acides minéraux pour l'hydrolyse de NCO,

a) des composés porteurs de groupes NCO en liaison aromatique, ayant une teneur en NCO de 0,5 à 40 g en poids,

b) avec des quantités en excès d'eau, d'au moins 2 moles d'eau par équivalent de groupe NCO,

c) en présence de solvants polaires miscibles à l'eau, avec des groupes dialkylamide d'acide carboxylique, lactame, tétraalkylurée, sulfone, sulfoxyde, dialkylamide d'acide phosphorique, nitrile et cétone présentant une plage d'ébullition de 56 à 250°C et ayant une constante diélectrique d'au moins 10 en quantités d'au moins 5 parties, par rapport à 100 parties de a),

le cas échéant

d) en présence de co-catalyseurs sous la forme

1. d'au moins 0,1 partie d'amines tertiaires pour 100 parties de composé NCO a) et/ou de

2. 0,01 à 10 % en poids de catalyseurs métalliques polyvalents et/ou de 0,1 à 10 parties en poids, pour 100 parties de a), des hydroxydes des groupes principaux I, II et/ou III du Système Périodique, des silicates alcalins, des cyanures alcalins, ainsi que, le cas échéant, en association avec d/1 et/ou d/2

3. de 0,1 à 10 parties en poids, pour 100 parties de a), de carbonates alcalins, de bicarbonates alcalins et/ou de sels alcalins et alcalino-terreux d'acides monocarboxyliques ou polycarboxyliques.

2. Procédé suivant la revendication 1, caractérisé en ce qu'on utilise comme composé NCO a) des composés NCO ayant une teneur en NCO de 1,5 à 10 % en poids dérivés de polyols de masse moléculaire élevée, dont la masse moléculaire a une valeur de 400 à 12 000, en utilisant éventuellement des agents d'allongement de chaîne de masse moléculaire allant de 62 à 388, et des diisocyanates aromatiques.

3. Procédé suivant les revendications 1 et 2, caractérisé en ce qu'on utilise une proportion d'eau b) d'au moins 5 fois la quantité molaire par rapport à un groupe NCO.

4. Procédé suivant les revendications 1 à 3, caractérisé en ce qu'on utilise comme solvants polaires c) miscibles à l'eau, le diméthylformamide, le diméthylacétamide, la N-méthylpyrrolidone, la tétraméthylènesulfone, l'acétonitrile et/ou l'acétone en quantités d'au moins 10 parties de d) pour 100 parties de a).

5. Procédé suivant les revendications 1 à 4, caractérisé en ce qu'on utilise comme solvants polaires miscibles à l'eau, l'acétonitrile et/ou le diméthylformamide.

6. Procédé suivant les revendications 1 à 5, caractérisé en ce qu'on utilise des amines aliphatiques ou cycloaliphatiques tertiaires ayant un point d'ébullition jusqu'à 250°C.

7. Procédé suivant les revendications 1 à 6, caractérisé en ce qu'on utilise comme trialkylamines non miscibles à l'eau, la triéthylamine, la tripropylamine et/ou la tributylamine.

8. Procédé caractérisé en ce qu'on utilise 40 parties de b) + c) + d) pour 60 parties de composé NCO a).

9. Des polyamines portant des groupes amino polymères en liaison aromatique et ayant une teneur en $NH_2$ de 0,19 à 20,3 % en poids, obtenues par un procédé suivant les revendications 1 à 8.

10. Utilisation des polyamines à groupes $NH_2$ primaires en liaison aromatique pour l'obtention de polyuréthannes éventuellement cellulaires ou transformés en mousse, par réaction :

A) de polyisocyanates et/ou de polyisocyanates bloqués avec

B) des polyamines, ainsi que, le cas échéant

C) d'autres composés de faible masse moléculaire et/ou de masse moléculaire élevée portant des groupes réactifs vis-à-vis d'isocyanates, éventuellement en présence de substances auxiliaires et d'additifs et/ou de solvants connus,

caractérisée en ce qu'on utilise comme composant B) les polyamines préparées par le procédé conforme à l'invention.